# EUROPEAN PATENT APPLICATION

(11) **EP 1 584 906 A1**
(43) Date of publication of application: **12.10.2005**
(21) Application number: 04702795.8
(22) Date of filing: 16.01.2004
(51) Int. Cl.: G01L 1/16

(54) **PRESSURE-SENSITIVE SENSOR AND OBJECT DETECTOR**

(30) Priority: 16.01.2003 JP 2003007813
(71) Applicant: MATSUSHITA ELECTRIC INDUSTRIAL CO., LTD., Kadoma-shi, Osaka 571-8501 (JP)
(72) Inventor: OGINO, Hiroyuki, Nara-shi, Nara 630-8024 (JP); UEDA, Shigeki, Yamatokohriyama-shi, Nara 630-1055 (JP)
(74) Representative: Grünecker, Kinkeldey, Stockmair & Schwanhäusser Anwaltssozietät
(86) International application number: PCT/JP2004/000271
(87) International publication number: WO 2004/063689

(57) **Abstract**

In a pressure sensor which suppresses outputs by a pyroelectric effect by improving the heat insulating properties thereof through selection of a material for a covering layer with a view to realizing the improvement in reliability and includes a center electrode 45, a composite piezoelectric material layer 49 which covers concentrically the circumference of the center electrode 45, an external electrode 47 which encompasses the outside of the composite piezoelectric material layer 49, a covering layer 51 which covers the outside of the external electrode 47 and an elastic edging material 35 which covers the circumference of the covering layer 51, whereby output signals are generated in the respective electrodes 45, 47 through deformation of the composite piezoelectric material layer 49 by virtue of an external pressure, by covering the elastic edging material 35 by a heat insulating means made from an expandable synthetic resin, a malfunction due to the pyroelectric effect is suppressed. In addition, the heat insulating means may be formed in such a manner as to cover a covering layer 51 made from a normal vinyl chloride and in such a manner as to cover a covering layer 51f made from an expandable synthetic resin having superior heat insulating properties, and alternatively, the heat insulating means may double as the covering layer.

## Description

### <Technical Field>

The present invention relates to a pressure sensor, a pressure sensor fabricating system and an object detecting system and, more particularly, to an improved pressure sensor that is used, for example, in a powered window system of an automobile in which a foreign matter trapping preventive function is required.

### <Background Art>

In recent years, a so-called powered window system for opening and closing a window glass of a vehicle using a driving force of a motor is used in a vehicle window glass opening and closing system.

This powered window system is equipped with an object detecting system for detecting the trapping of a foreign matter in order to avoid an injury to the hand or fingers in the event that the hand or fingers are erroneously trapped, for example, between a window frame and a window glass when the window glass is operated to be closed by stopping the closing operation of the window glass or shifting the closing operation to an opening one.

This object detecting system is made to include a pressure sensor that is laid out along an edge of the window frame for generating an output signal by a deformation that is caused when a foreign matter is brought into contact therewith and a determination means for determining on the contact of the foreign matter to the pressure sensor based on the output signal so generated by the pressure sensor (refer to, for example, Patent Document No. 1).
[Patent Document No. 1]
JP-A-2001-153734

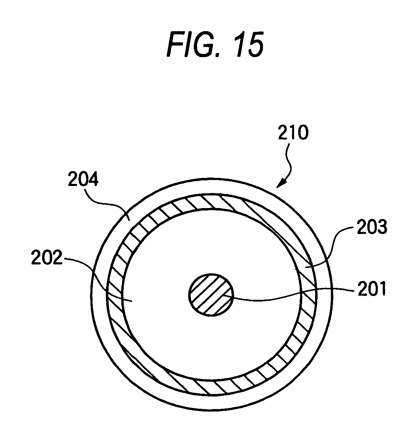

Conventionally, there has been proposed a pressure sensor as shown in Fig. 15 as a pressure sensor that is used in the object detecting system.

This pressure sensor 210 is such as to be called a so-called piezoelectric element type and is made to include a center electrode 201, a piezoelectric layer 202 which covers the circumference of the center electrode 201 substantially concentrically, a circularly tubular external electrode 203 which encompasses the outside of the piezoelectric layer 202 and a covering layer 204 made from vinyl chloride which covers the outside of the external electrode 203, wherein output signals are generated in the center electrode 201 and the external electrode 203 by virtue of the deformation of the piezoelectric layer 202 due to an external pressure (refer to, for example, Patent Document No. 2).
[Patent Document No. 2]
JP-A-2001-324393

### <Disclosure of the Invention>

Incidentally, the pressure sensor 210 of a piezoelectric element type uses a piezoelectric ceramic as the piezoelectric layer 202. This piezoelectric ceramic is made mainly from lead titanate and chlorinated polyethylene and has a so-called pyroelectric effect in which when the piezoelectric layer 202 is exposed to a drastic change in environment temperature, an electric charge output is generated as when the piezoelectric layer 202 is deformed by an external pressure.

While the conventional piezoelectric element type pressure sensor 210 is covered by the covering layer 204 made from vinyl chloride, the heat insulating performance is not sufficient, and the piezoelectric layer 202 is strongly affected by a change in outside temperature, whereby in the event that the ambient temperature of a sensor provided portion drastically changes for some reason, the aforesaid pyroelectric effect becomes specific and there has been caused a risk that an output due to the pyroelectric effect is erroneously recognized as a contact of an object.

To cope with this, in order to prevent the erroneous recognition of the output due to the pyroelectric effect as the contact of an object, a countermeasures has come to be necessary in which the output due to the pyroelectric effect is to released through electric discharge, and due to this countermeasures, there have been caused problems that the equipment of the pressure sensor 210 is made difficult and highly increased equipment costs are called for.

The invention was made in view of the problems and an object thereof is to provide, without spending the high costs for the countermeasures against the pyroelectric effect, a pressure sensor which increases the reliability with respect to object detection by suppressing the electric discharge output attributed to the pyroelectric effect so as to avoid the risk that the output due to the pyroelectric effect is mistakenly recognized as the contact of an object, a pressure sensor fabricating method and an object detecting system.

With a view to attaining the object, a pressure sensor according to the invention includes a sensor unit in which a piezoelectric layer containing a piezoelectric ceramic material is sandwiched by a plurality of electrodes, a covering layer which covers the sensor unit and a heat insulating means made from expandable synthetic resin which covers the circumference of the covering layer.

In the pressure sensor that is constructed as has been described above, even in the event that the ambient temperature surrounding the pressure sensor or, strictly speaking, the outside temperature and the temperature of the equipment base material on which the pressure sensor is mounted change drastically, since the heat insulating means which covers the plurality of electrodes and the piezoelectric layer has superior heat insulating properties when compared with the conventional covering layer made from vinyl chloride, the transmission of the external drastic change in temperature to the internal piezoelectric layer can be suppressed.

Consequently, the electric charge output attributed to the pyroelectric effect can be suppressed, whereby the risk can be avoided that the output due to the pyroelectric effect is mistakenly recognized as the contact of an object, thereby making it possible to increase the reliability with respect to object detection.

In addition, the pressure sensor of the invention includes a fact that the sensor unit is a cable-like sensor including a primary electrode which makes up a core unit, a piezoelectric layer which covers the primary electrode and a secondary electrode which covers the outside of the piezoelectric layer.

According to this construction, a high-sensitivity elongated sensor can be made with good efficiency.

In addition, the pressure sensor of the invention includes a fact that the sensor unit is a sheet-like sensor which is formed such that a piezoelectric layer is sandwiched by a primary electrode and a secondary electrode.

According to this construction, a sensor of a wide area can be formed by a simple construction.

In addition, the pressure sensor of the invention includes a fact that the heat insulating means is an elastic material having a hollow portion formed therein.

According to this construction, a sensor can be obtained which can provide a higher heat insulating effect.

In addition, in the event that the heat insulating means is formed of the elastic material having heat insulating properties, the deformation of the piezoelectric layer when a foreign matter is brought into contact therewith is facilitated, thereby making it possible to ensure the detection of the contact of the foreign matter.

In addition, the pressure sensor of the invention includes a fact that the heat insulating means doubles as the covering layer.

From this, the erroneous recognition due to the pyroelectric effect can be avoided only by covering the outside of the sensor unit by the heat insulating means which is made from expandable synthetic resin. Namely, the heat insulation can be ensured by the extremely simple construction by making the conventional covering layer be formed integrally with the heat insulating means made from the expandable synthetic resin.

In addition, the pressure sensor of the invention includes a fact that the heat insulating means includes a mounting portion for mounting the pressure sensor on an equipment base material.

This can obviate the necessity of providing a separate mounting means to thereby realize the improvement in efficiency of the mounting operation.

In addition, a pressure sensor fabricating method according to the invention is characterized in that a heat insulating means is molded on the periphery of the sensor unit through extrusion molding.

In the pressure sensor fabricating method that is configured as has been described above, since an elastic material is fabricated in such a manner as to cover the circumference of the sensor unit including a plurality of electrode and a piezoelectric layer by the general fabricating method such as extrusion molding, the pressure sensor can be fabricated simply and inexpensively.

An object detecting system of the invention is characterized by the inclusion of the pressure sensor and a determination means for determining on the contact of a foreign matter with the pressure sensor based on an output signal of the pressure sensor, whereby the contact of an object with the equipment is detected.

In addition, the object detecting system of the invention is characterized by the inclusion of the pressure sensor that is mounted either on an edge of an opening of equipment or on an edge of a closing member which opens and closes the opening and a determination means for determining on the contact of a foreign matter with the pressure sensor based on an output signal of the pressure sensor, whereby the trapping of a foreign matter between the opening and the closing member is detected.

In the object detecting system that has been constructed as has been described above, the contact with an object or the trapping of an object can be detected with high reliability while obviating the necessity of the connection of an electric discharge circuit which functions as a countermeasures against the pyroelectric effect that would otherwise affect the pressure sensor.

In addition, normally, the pressure sensor is laid out along an elastic edging material that is mounted on an edge of an opening in the equipment base material. In the pressure sensor, however, the heat insulating means which covers the plurality of electrodes and the piezoelectric layer can secure pliability and shock-absorbing characteristics that are required for the elastic edging material, the covering layer itself, which forms the heat insulating means, can be made to double as an elastic edging material having a mount portion which is mounted on the edge of the equipment base material and the opening, thereby making it possible to realize the improvement in mounting characteristics on the equipment base material and the opening and the reduction in costs by the reduction in the number of components.

In the pressure sensor of the invention, even in the event that the ambient temperature surrounding the pressure sensor or, strictly speaking, the outside temperature and the temperature of the equipment base material on which the pressure sensor is mounted change drastically, since the heat insulating means made from the expandable synthetic resin which covers the plurality of electrodes and the piezoelectric layer has superior heat insulating properties or the elastic material having the hollow portion formed therein is equipped, the external drastic change in temperature is not transmitted to the internal composite piezoelectric layer.

Consequently, the electric charge output attributed to the pyroelectric effect can be suppressed without spending much cost on the countermeasures against, in particular, the pyroelectric effect, whereby the risk can be avoided that the output due to the pyroelectric effect is mistakenly recognized as the contact of an object, thereby making it possible to increase the reliability with respect to object detection.

In addition, in the event that the heat insulating means is formed from the elastic material having the heat insulating properties, the deformation of the piezoelectric layer resulting when a foreign matter is brought into contact therewith is facilitated, thereby making it possible to ensure the detection of the contact of the foreign matter.

In addition, in the pressure sensor fabricating method of the invention, since the pressure sensor is fabricated through extrusion molding, the pressure sensor can be fabricated simply and inexpensively.

In addition, in the object detecting system of the invention, even in the event that an electric discharging circuit is not connected as the countermeasures against the pyroelectric effect that would otherwise be caused, the contact with an object or the trapping thereof can be detected with high reliability.

In addition, normally, the pressure sensor is laid out along an elastic edging material that is mounted on an edge of an opening in the equipment base material. In the pressure sensor, however, the covering layer can secure pliability and shock-absorbing characteristics that are required for the elastic edging material, the covering layer itself can be made to double as an elastic edging material that is mounted on the edge of the equipment base material and the opening, thereby making it possible to realize the improvement in mounting characteristics on the equipment base material and the opening and the reduction in costs by the reduction in the number of components.

### <Brief Description of the Drawings>

Fig. 1 is an external view of a first embodiment of an opening and closing system in which a pressure sensor and an object detecting system according to the invention are installed,
Fig. 2 is a sectional view taken along the line C-C in Fig. 1,
Fig. 3 shows cross-sectional views of a piezoelectric cable which constitutes the pressure sensor of the invention,
Fig. 4 is an external view of the pressure sensor of the invention,
Fig. 5 is a block diagram of the object detecting system and the opening and closing system shown in Fig. 1,
Fig. 6 is a perspective view showing how the pressure sensor deforms when a foreign matter is trapped while a closing operation is being carried out in an opening,
Fig. 7 shows characteristic charts illustrating an output signal V from a filtering module, a determination signal J of a determination means and an application voltage Vm to a motor, respectively, in the opening and closing system shown in Fig. 1,
Fig. 8 shows explanatory drawings of a method for preventing the trapping by the output signal V from the filtering module and the determination output J of the determination means in the opening and closing system shown in Fig. 1,
Fig. 9 is a cross-sectional view of another embodiment of a piezoelectric cable of the invention,
Fig. 10 is a sectional view of a pressure sensor of a second embodiment of the invention,
Fig. 11 is a chart showing sensor outputs from the pressure sensor of the first embodiment of the invention,
Fig. 12 is a chart showing sensor outputs from a conventional pressure sensor,
Fig. 13 is a chart showing sensor outputs from the pressure sensor of the second embodiment of the invention,
Fig. 14 shows comparison charts illustrating temperature changes in cross sections of the pressure sensors of the invention and the conventional example, and
Fig. 15 is an exploded cross-sectional view of the conventional pressure sensor.

Note that in the drawings, reference numerals denote as follows: 11 a door; 13 a window frame (an opening); 15 a window glass (a closing member) ; 17 a pressure sensor; 19 a determination means; 21 an opening and closing means; 23 an opening and closing control means; 25 a motor; 27 a wire; 29 a support device; 31 a guide; 33 a piezoelectric cable; 41 a hollow portion; 42 an insertion hole; 45 a center electrode; 47 an external electrode; 49 a composite piezoelectric layer; 51 a covering layer; 55 a disconnection detecting resistor; 61 a voltage dividing resistor; 62 a filtering module; 63 a determination module; 65 a signal input module; 66 a signal output module; 67 a bypassing module; 72 a closing portion contact determining module; 73 a control module; 78 a hollow portion; 100 an object detecting system; and 150 an opening and closing system.

### <Best Mode for Carrying out the Invention>

A pressure sensor, a pressure sensor fabricating method and an object detecting system according to embodiments of the invention will be described below based on the accompanying drawings.

### (First Embodiment)

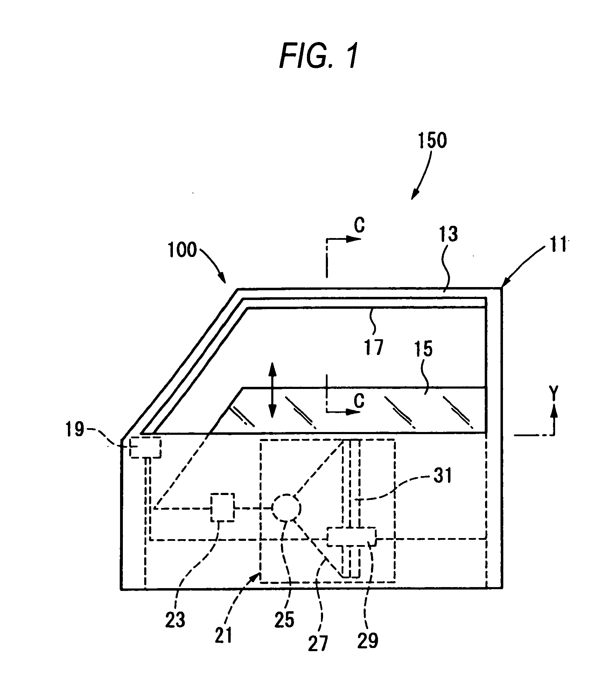

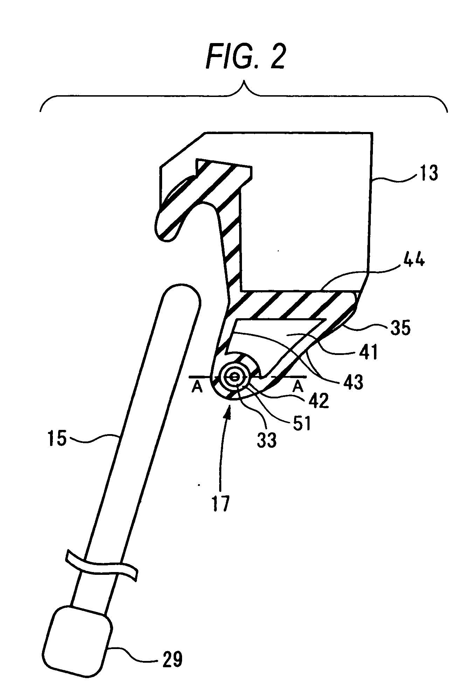

Fig. 1 shows external views of an object detecting system using a pressure sensor according to a first embodiment of the invention and an opening and closing system and illustrates an example in which the pressure sensor of the invention is applied to a powered window system of an automobile. Fig. 2 is a sectional taken along the line C-C in Fig. 1. Note that in Fig. 2, a right-hand side denotes the inside of a passenger compartment and a left-hand side denotes the outside of the passenger compartment.

In Fig. 1, reference numeral 11 denotes a door of the automobile, reference numeral 13 denotes a window frame as an opening and reference numeral 15 denotes a window glass as a closing member for closing the opening. Reference numeral 17 denotes a pressure sensor, which is provided along a circumferential edge of an end portion of the window frame 13. An object detecting system 100 of the invention includes the pressure sensor 17 disposed along the edge of the end portion of the window frame 13 and a determination means 19 which is connected to an end portion of the pressure sensor 17 for determining on the contact of an object (a foreign matter) with the pressure sensor 17 based on an output signal from the pressure sensor 17, whereby when the hand, fingers or any other object is trapped between the window frame 13 and the window glass 15, the object detecting system 100 is designed to detect such a trapping.

In addition, an opening and closing system 150 of the embodiment is made up of the object detecting system 100, an opening and closing driving means 21 for opening and closing the window glass 15 and an opening and closing control means 23 for controlling the opening and closing driving means 21. Here, the opening and closing driving means 21 is made up of a motor 25, a wire 27, a support device of the window glass 15, a guide 31 and the like. The window glass 15 is constructed so as to be opened and closed by moving up and down the support device 29 linked with the wire 27 along the guide 31 by moving the wire 27 by the motor 25.

Note that the system of the opening and closing driving means 21 is not limited to one using the wire 27 as described above but other systems may be used. In addition, the opening and closing control means 23 may be integrated with the motor 25.

As shown in Fig. 2, the pressure sensor 17 of the embodiment is made up of a flexible piezoelectric cable 33 as a pressure sensing means and an elastic edging material 35 as a heat insulating means made from an expandable urethane resin which has an insertion hole 42 through which the piezoelectric cable 33 is inserted and passed for support and which is mounted on the window frame 13 via mount portion 44.

The elastic edging material 35 is such as to be formed from, for example, a rubber material and to be mounted along the edge of the window frame 13 in order to function as a packing when joined to the window glass 15 and as a damper for a contact portion of the window glass 15, and the insertion hole 42 through which the piezoelectric cable 33 is passed, a hollow portion 41 and a side wall portion 43 are provided in the elastic edging material 35 in the vicinity of a lowermost portion thereof.

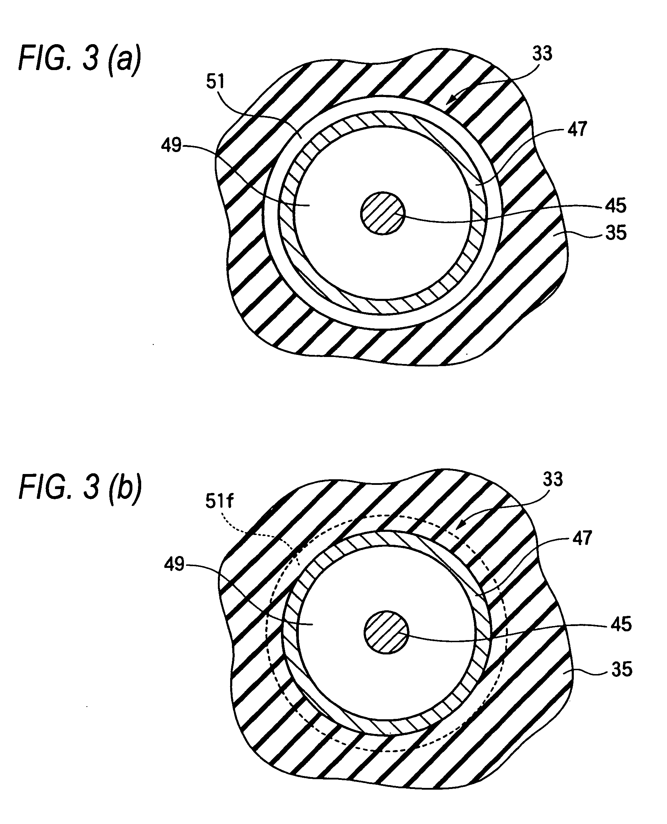

Fig. 3(a) is a cross-sectional view showing the piezoelectric cable 33, which is the pressure sensing means of the pressure sensor 17 of the embodiment, and the vicinity thereof. This piezoelectric cable 33 is made by laminating concentrically a sensor unit, which includes a center electrode 45, which is an electrode which a signal is made to leave, an external electrode 47 and a composite piezoelectric material layer 49 made from a composite piezoelectric material which is a mixture of a rubber elastic material made from chlorinate polyethylene and sintered powder of piezoelectric ceramic, and a covering layer 51 made from vinyl chloride in such a manner that the covering layer 51 is situated outside the sensor unit for extrusion molding into a cable-like shape (namely, an elongated shaft-like shape) and thereafter polarizing what has been so extrusion molded, whereby the piezoelectric cable 33 has a superior flexibility and outputs an output signal according to deformation acceleration at the time of deformation.

Sintered powders of lead titanate, or lead titanate-zirconate, or leadless piezoelectric ceramic such as bismuth-sodium titanate, sodium niobate and potassium niobate are used as the piezoelectric ceramic.

The piezoelectric cable 33 is fabricated via the following steps. Firstly, a chlorinated ethylene sheet and a 40 to 70 vol% piezoelectric ceramic (here, lead titanate-zirconate) are uniformly mixed together into a sheet-like shape via a rolling process. This sheet is cut minutely into pellets, and thereafter, these pellets are continuously extruded together with a center electrode 45 to thereby form a composite piezoelectric material layer 49. Then, an external electrode 47 is wound around the composite piezoelectric material layer 49. A covering layer 51 is also continuously extruded in such a manner as to surround the external electrode 47. Finally, a direct current high voltage of 5 to 10kV/mm is applied between the center electrode 45 and the external electrode 47 so as to polarize the composite piezoelectric material layer 49.

A temperature characteristic of a pressure sensor that is formed as has been described above was measured.

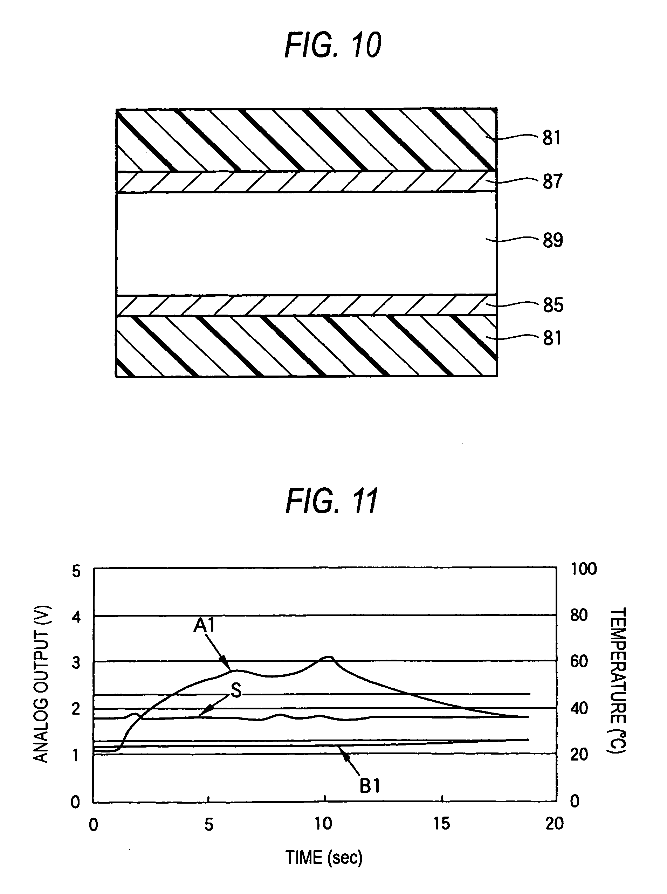

The results are shown in Fig. 11. It was found that when the surface of the pressure sensor was heated by applying warm air to the sensor, the temperature at the sensor surface was maintained without exceeding a threshold temperature as shown by a curve B1 when the surface temperature of the heat insulating means which covers the sensor surface rose as shown by a curve A1. A sensor output generated as this occurred is shown by a curve S1 and a good result without noise could be obtained.

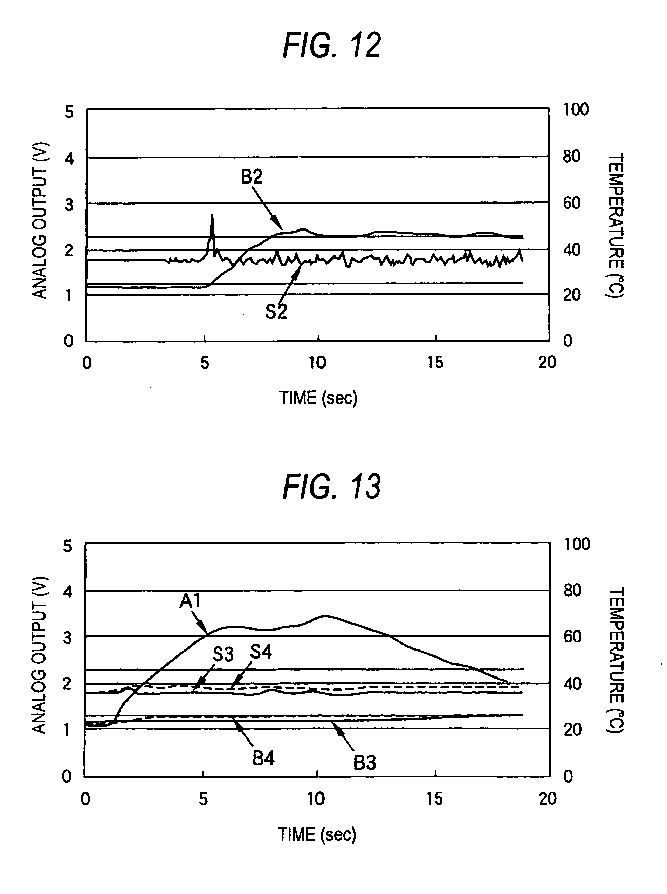

In contrast to this, when a pressure sensor in which no heat insulating means was provided was heated, the sensor surface temperature rose as shown by a curve B3 in Fig. 12 and exceeded the threshold temperature. Noise appeared in the sensor output generated as this occurred as shown by a curve S2.

From the comparison between Fig. 11 and Fig. 12, according to the invention, it is possible to obtain an output characteristic which is free from noise attributed to pyroelectric effect.

When adding the piezoelectric ceramic powder to the chlorinated ethylene, the piezoelectric ceramic powder is preferably submerged in a solution of a titanium coupling agent and is then dried in advance. By being treated like this, the surface of the piezoelectric ceramic powder is covered with a hydrophilic group and a hydrophobic group which are contained in the titanium coupling agent.

The hydrophilic group prevents the aggregation of piezoelectric ceramic powders, and the hydrophobic group enhances the wetting characteristics between chlorinated polyethylene and piezoelectric ceramic powder. As a result, the piezoelectric ceramic powder can be added uniformly to the chlorinated polyethylene in a large amount up to a maximum of 70 vol%. It has been found that a similar effect to what has just been described can be obtained by adding the titanium coupling agent while chlorinated polyethylene and piezoelectric ceramic powder are being rolled, in place of submerging the piezoelectric ceramic powder in the titanium coupling agent. This treatment is superior in that the submerging treatment in the titanium coupling agent is required particularly. Thus, chlorinated polyethylene also plays a role of a binder resin when piezoelectric ceramic powder is mixed. Note that a non-halogen material such as a thermoplastic elastomer may be used in place of chlorinated polyethylene.

In the case of this embodiment, a single-wire conductor or a plurality of conductors of a copper-system metal or stainless steel is used the center electrode 45.

In addition, a belt-like electrode in which a metallic film of copper is bonded onto a polymeric layer is used for the external electrode 47 and the external electrode 47 so formed is made to be wound around the circumference of the composite piezoelectric material layer 49. Then, polyethylene terephthalate (PET) is used as the polymeric layer, and since an electrode in which the copper film is bonded onto polyethylene terephthalate is mass produced commercially and inexpensive, it is preferable to use the electrode as the external electrode 47. In connecting this electrode to the determination means 19, the connection can be implemented via soldering.

In addition, a belt-like electrode in which an aluminum layer is bonded to PET may be used as the external electrode 47, and this leads to a more inexpensive electrode. However, since soldering cannot be used for aluminum, in connecting this electrode to the determination means 19, the electrode can be so connected by virtue of, for example, crimping or using a grommet. As this occurs, a construction may be adopted in which a metallic single-wire coil or a metallic braided wire is wound around the aluminum film of the external electrode 47 so as to establish a conductivity with the external electrode, and the metallic single-wire coil or the metallic braided wire is soldered to the determination means 19, and in this case, since soldering becomes possible, the working efficiency can be promoted.

Note that the external electrode 47 is preferably wound around the composite piezoelectric material layer 49 in such a manner as to partially overlap in order to shield the piezoelectric cable 33 from electric noise of the external environment.

Furthermore, while in the aforesaid embodiment, the covering layer 51 is made from vinyl chloride as with the conventional example and the heat insulating means from expandable synthetic resin is made to surround the outside thereof, as shown in a modified example shown in Fig. 3 (b), it was found that a further heat insulating effect could be obtained by replacing the covering layer 51 by a covering layer 51f made from expandable synthetic resin.

It was found that when the surface of the pressure sensor was heated by similarly applying warm air to the sensor, the temperature at the surface of the sensor unit was maintained without exceeding the threshold temperature as shown by a curve B3 even when the surface temperature of the insulating means which covers the sensor surface rose largely as shown by a curve A2 in Fig. 13. A sensor output as this occurred was indicated by a curve S3 and a good result which is free from noise could be obtained.

In this case, when the pressure sensor of the first embodiment, in which the covering layer is made from vinyl chloride and the heat insulating means is provided around the outside thereof, was similarly heated, the sensor surface temperature rose as shown by a dotted line B4, and there was a slight rise in temperature although it did not exceed the threshold temperature. In addition, a sensor output generated as this occurred was indicated by a curve S4 and noise appeared slightly.

Thus, the heat insulating properties can be improved, so that the pressure sensor with high reliability can be obtained by making not only the heat insulating means but also the covering layer from expandable synthetic resin.

Note that the covering layers 51, 51f may be made to double as the heat insulating means.

In addition, as the heat insulating means and the covering layer 51f as the heat insulating means, it is desirable to use expandable synthetic resin which is superior in heat insulating properties and waterproofness to vinyl chloride which was used in the conventional pressure sensor and is more desirable to use an elastic material. As such an elastic material, for example, an expandable synthetic resin such as expandable urethane is preferred. As the expandable synthetic resin, it is possible to use an elastomer (a rubber elastic material) which is provided with elasticity by changing the constitution of raw rubber and crosslinking (or vulcanizing) what has resulted from the constitution change or an elastomer in which an expanded structure is realized by adding an expanding agent to a thermoplastic elastomer for reaction.

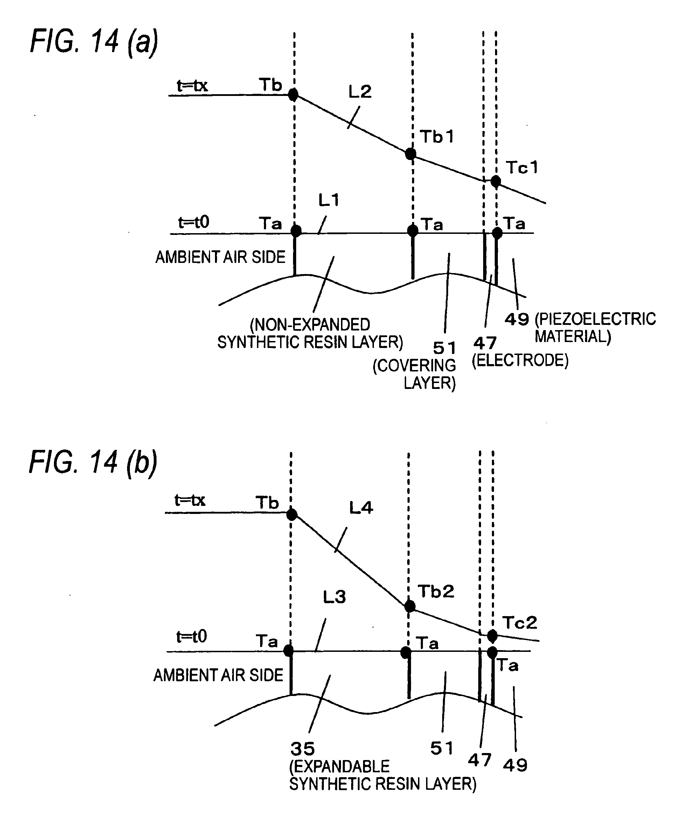

Note that in a case where a heat insulating material made from a synthetic resin having no expandable characteristic is used on the outside of the covering layer 51 made from vinyl chloride as the elastic edging material 35, it is found that when a temperature distribution resulting when a time t at which the ambient air temperature, the elastic edging material, the covering layer 51, the electrode 47 and the piezoelectric layer 49 are in a thermally equilibrium state at Ta is t0 or t=t0 has a distribution curve as shown by L1 in Fig. 14 (a), a temperature distribution resulting when the ambient temperature drastically changes from Ta to Tb has a distribution curve as shown by L2 and that the temperature of the piezoelectric material rises with a moderate distribution from the outside towards the inside of the sensor. Here, each point denotes each layer when Fig. 2 is cross-sectioned along the line A-A.

In contrast to this, in a case where a heat insulating material made from an expandable synthetic resin is used as the elastic edging material 35, it is found that when a temperature distribution resulting when a time t at which the ambient air temperature, the elastic edging material, the covering layer 51, the electrode 47 and the piezoelectric layer 49 are in a thermally equilibrium state at Ta is t0 or t=t0 has a distribution curve as shown by L3 in Fig. 14 (b), a temperature distribution resulting when the ambient temperature drastically changes from Ta to Tb has a distribution curve as shown by L4, which is a distribution becoming sharp from the outside towards the inside of the sensor and that the temperature of the piezoelectric material is maintained without rising much.

Here, each point in Figs. 14 (a), 14(b) denotes each layer when Fig. 2 is cross-sectioned along the line A-A.

Here, the temperature at an interfacial boundary between the piezoelectric layer 49 and the electrode 47 becomes Tc1>Tc2, and it is found from this result that the emergence of pyroelectric effect is suppressed due to a rate of change in temperature from Ta at a predetermined time when the elastic edging material 35 made from the expandable synthetic resin is used becoming small.

Here, each point in Figs. 14(a), 14(b) denotes each layer when Fig. 2 is cross-sectioned along the line A-A.

Here, it is possible to use, as the expandable synthetic resin, a resin in which an expanded structure is formed by adding for reaction an expanding agent to elastomers such as isoprene rubber (IR), butadiene rubber (BR), styrene- butadiene rubber (SBR), chloroprene rubber (CR), nitrile rubber (NR), butyl rubber (IIR), ethylene-propylene rubber (EPM, PEDM), chlorosulfonated polyethylene (CSM), acrylic rubber (ASM, ANM), epichlorohydrin rubber (CO ECO), polysulfide rubber (T), silicone rubber (Q), fluoride rubber (FKM) and urethane rubber (U) and thermoplastic elastomers such as polystyrene thermoplastic elastomer (TPS), polyolefin thermoplastic elastomer (TPEE), polyurethane thermoplastic elastomer (TPU), polyester thermoplastic elastomer (TPEE), polyamide thermoplastic elastomer (TPEA), polybutadiene thermoplastic elastomer (TPU), ethylene-vinyl acetate thermoplastic elastomer (PVC-TPE), natural rubber thermoplastic elastomer, trans-polyisoprene thermoplastic elastomer and chlorinated polyethylene thermoplastic elastomer (CM). Here, in forming the expanded structure, an organic expanding agent, a crosslinking agent, a softening agent and a strengthening agent are incorporated into the elastomer such as natural rubber and synthetic rubber and the thermoplastic elastomer, and the expanding agent is decomposed while performing vulcanization within a closed mold to thereby form an expanded structure.

As has been described above, since the composite piezoelectric material of the piezoelectric cable 33 has both the flexibility provided by chlorinated polyethylene and the durability at high temperatures provided by piezoelectric ceramic, the reduction in sensitivity at high temperatures inherent in a conventional piezoelectric sensor using polyvinylidene fluoride as the piezoelectric material can be eliminated, and since not only the durability at high temperatures is superior but also no vulcanization step is required at the time of molding which is required in the case of a rubber such as ethylene propylene rubber (EPDM), there can be obtained an advantage that the production efficiency is improved.

In addition, the rubber material used for the elastic edging material 35 should be a rubber material having higher pliability and flexibility than those of the composite piezoelectric material layer 49 so as to facilitate the deformation of the composite piezoelectric material layer 49 by virtue of the pressurizing force of an article which is brought into contact therewith. The rubber material is to be selected in consideration of resistance to high temperatures and resistance to low temperatures required for on-board components and to be specific, it is preferable to select a rubber material in which the reduction in flexibility is not much at temperatures from -30°C to 85°C. As the rubber material, for example, EPDM, chloroprene rubber (CR), butylenes rubber (IIR), silicone rubber (Si), thermoplastic elastomer (TPER) and the like may be used. By adopting the construction that has been described heretofore, the minimum curvature of the piezoelectric cable 33 can be reduced to a radius of 5mm.

By using a material having high heat insulating properties for the covering layer 51 in addition to the elastic edging material 35, the effect of reducing malfunctions due to the pyroelectric effect can be enhanced. As with the elastic edging material, expandable resins can be applied to the material thereof.

Note that in the event that the elastic edging material 35 is made from the expandable resin, since the heat insulating effect can be obtained by this elastic edging material 35, the covering layer 51 may be made from vinyl chloride. In this case, a normal piezoelectric cable can be used for the fabrication of the pressure sensor, whereby the fabrication can be facilitated.

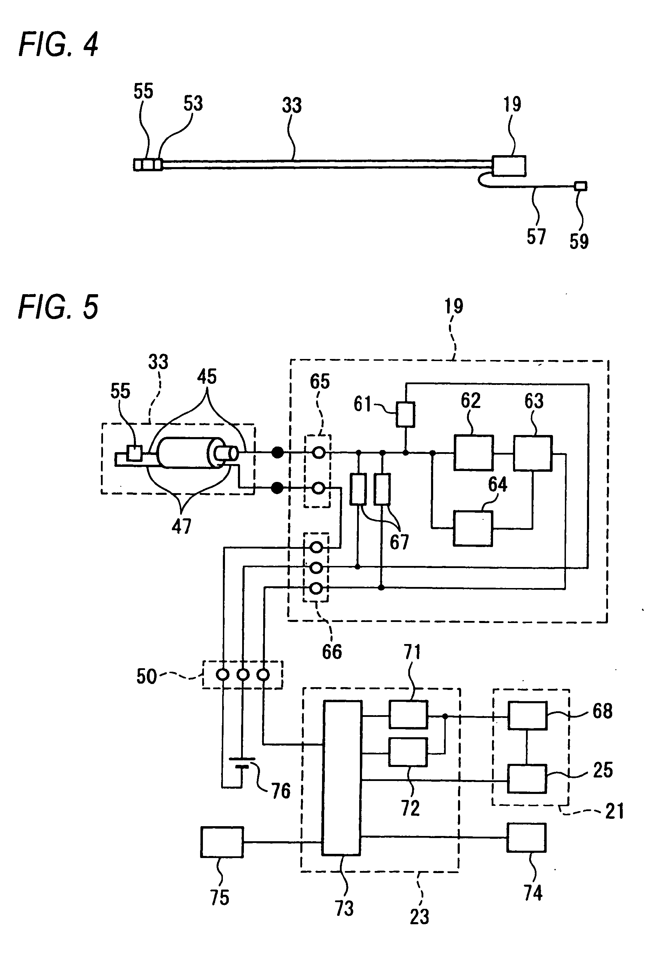

Fig. 4 is an external view of the piezoelectric cable 33, and a disconnection detecting resistor 55 is incorporated in the piezoelectric cable 33 at one end portion 53 thereof. The detection detecting resistor 55 is connected between the center electrode 45 and the external electrode 47. The disconnection detecting resistor 55 is made to double as a discharge module which discharges electrical charges that are generated in the piezoelectric cable 33 by virtue of pyroelectric effect, which realizes the rationalization of components. The piezoelectric cable 33 is directly connected to the determination means 19, and the piezoelectric cable 33 and the determination means 19 are made integral with each other. In addition, a cable 57 for supplying power supply and outputting a detection signal and a connector 59 are connected to the determination means 19. When providing the piezoelectric cable 33 in the elastic edging material 35, the disconnection detecting resistor 55 is incorporated in the end portion 53 provided portion 53 and the piezoelectric cable 33 is inserted into the sensor insertion hole 42. Thereafter, the piezoelectric cable 33 and the determination means 19 are connected to each other so as to be made integral with each other.

Note that the piezoelectric cable 33 is extrusion molded at the same time that the elastic edging material 35 is molded through extrusion molding, the piezoelectric cable 33 is provided in the elastic edging material 35, and thereafter, the disconnection detecting resistor 55 is incorporated in the end portion 53, so that the piezoelectric cable 33 and the determination means 19 may be made integral with each other.

Fig. 5 is a block diagram of the object detecting system 100 and the opening and closing system 150 according to the embodiment.

The determination means 19 includes a voltage dividing resistor 61 for use in detecting a disconnection of the pressure sensor 17, a filter module 62 for allowing the passage of only a predetermined frequency constituent from an output signal from the piezoelectric cable 33, a determination module 63 for determining on the contact of an object to the pressure sensor 17 based on an output signal from the filter module 62 and an abnormality determination module 64 for determining on the disconnection abnormality of the center electrode 45 and the external electrode 47 of the piezoelectric cable 33 from a voltage value that is formed by the disconnection detecting resistor 55 and the voltage dividing resistor 61.

In addition, a signal input module 65, which connects the center electrode 45 and the external electrode 47 to the determination means 19 and inputs an output signal from the piezoelectric sensor 33 into the determination means 19, and a signal output module 66, which outputs a determination signal from the determination module 63, are provided adjacent to each other within the determination means 19. A power supply line to the determination means 19, as well as a ground line are connected to the signal output module 66. Furthermore, the determination means 19 has a bypass module 67 such as a capacitor which is provided between the signal input module 65 and the signal output module 66 for bypassing a high-frequency signal.

The driving means 21 has a Hall element 68 for detecting a rotational pulse of the motor 25.

The control means 23 is provided with a position detecting module 71 for detecting an upper end position of the window glass 15 based on an output signal from the Hall element 68, an opening and closing portion contact determination module 72 for determining on the contact of an object to the window glass 15 by detecting the moving speed of the window glass 15 based on an output signal from the Hall element 68 and a control module 73 for controlling the motor 25 based on output signals from the determination means 19, the position detecting module 71 and the opening and closing portion contact determination module 72.

The position detecting module 71 counts and stores pulse signals outputted from the Hall element 68 so as to detect a current upper end position of the window glass 15. Here, The upper end position Y of the window glass 15 is represented by a height from a lowest point of the window frame 13 as shown in Fig. 1.

The opening and closing portion contact determination module 72 calculates the moving speed of the window glass 15 from pulse intervals of pulse signals outputted from the Hall element 68 based on the fact that the moving speed of the window glass 15 slows when an object is brought into contact with the window glass 15 and determines that an object is brought into contact with the window glass 15 in the event that a variation |ΔVw| per unit time of a moving time so calculated becomes greater than a preset value VW1 to thereby output pulse signals of Lo -> Hi -> Lo.

Here, of the pulse signals so outputted, the signal of Hi level constitutes a determination signal.

In addition, an informing means 74 for informing a result of determination by the determination means 19 via a predetermined light or the like that is arranged on a front panel of a passenger compartment and an opening and closing switch 75 for opening and closing the window glass 15 are connected to the control means 23. This opening and closing switch 75 includes a one shot up switch and a one shot down switch, which are designed to open and close the window glass via a one-touch operation, and a manual up switch and a manual down switch, which are designed to open and close the window glass 15 by being manually operated. Then, a power supply 76 is provided which is made up of an automotive battery which supplies electric power through the determination means 19.

The filter module 62 has filtering properties in which unnecessary signals which are generated by vibrations or the like of a vehicle body of an automobile are removed from output signals from the piezoelectric cable 33 and specific frequency constituents which appear in output signals from the piezoelectric cable 33 are extracted. For the determination of filtering properties, the vibration properties of the vehicle body of the automobile and vibrations of the vehicle body generated when running may only have to be analyzed for optimization.

In order to remove electrical noise from the outside, the whole of the determination means 19 is covered by a shielding member so as to be shielded electrically. In addition, the external electrode 47 is made to electrically continue with the shielding member of the determination means 19, so that the pressure sensor 17 is also electrically shielded. Note that a countermeasures against a strong electric field may be implemented by adding a feedthrough capacitor and an EMI filter to an input/output module in the aforesaid circuit.

Next, a basic operation to be carried out when detecting the contact of an object with the pressure sensor 17 by the object detecting system 100 will be described.

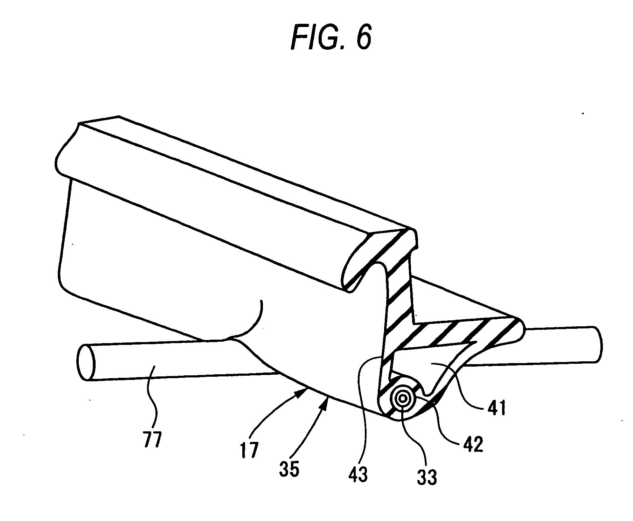

Fig. 6 shows a condition of the pressure sensor 17 resulting when an object 77 enters to be trapped between the window frame and the window glass. When the object 77 is brought into contact with the pressure sensor 17, a pressure by the object 77 is applied to the elastic edging material 35 and the piezoelectric cable 33. Since the elastic edging material 35 has more pliability than the piezoelectric cable 33, the elastic edging material 35 is, as shown in the drawing, compressed about a point where the object 77 comes into contact therewith by virtue of the pressure so applied, and the side wall portion 43 deforms, at the same time, the hollow portion 41 being collapsed, whereby the piezoelectric cable 33 is bent and deformed about the point where the object 77 is brought into contact with the elastic edging material 35. In addition, a similar deformation is generated in the pressure sensor 17 even by grabbing the window frame including the pressure sensor 17 by the hand.

When the piezoelectric cable 33 is deformed like this, an output signal according to the acceleration of deformation is outputted from the piezoelectric cable 33 due to the piezoelectric effect. An output signal so outputted from the piezoelectric cable 33 is then filtered by the filter module 62. While there may occur a case where an output signal generated by an unnecessary vibration component attributed to vibrations of the vehicle body of the automobile appears in output signals from the piezoelectric cable 33, the filter module 62 removes this unnecessary signal.

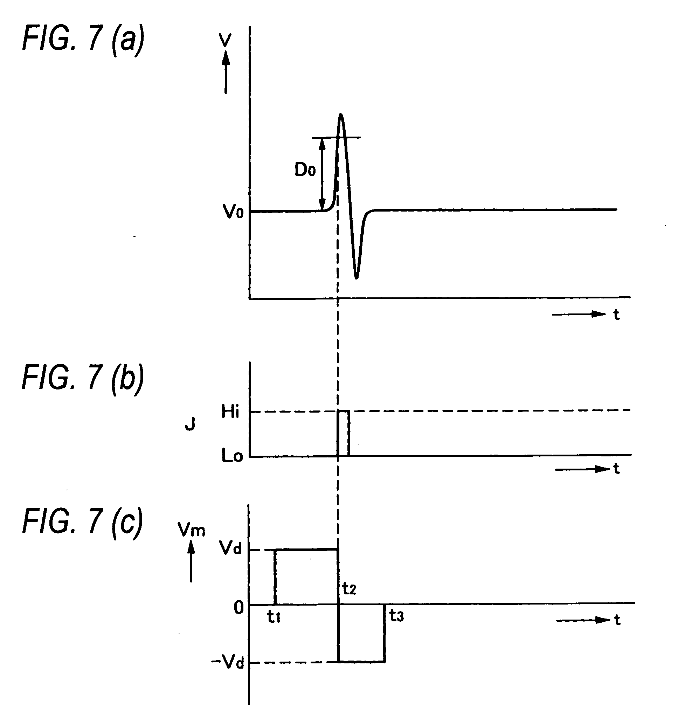

Here, an operating procedure of the determination module 63 and the control module 73 will be described based on Fig. 7.

Fig. 7 shows characteristic drawings illustrating an output signal V from the filter module 62, a determination output J of the determination means 19 and an application voltage Vm to the motor 25. In Fig. 7, the axes of ordinates represent V, J and Vm, respectively, from the top and the axes of abscissas represent time t.

When the one shot up switch of the opening and closing switch 75 is switched on at a time t, the control module 73 applies a voltage of +Vd to the motor 25 so as to operate the window glass 15 to be closed. The determination means 19 performs a determination operation when the window glass 15 is operated to be closed. In the event that the object 77 is trapped as shown in Fig. 6, a signal according to the acceleration of a deformation occurring on the piezoelectric cable 33 is outputted from the piezoelectric cable 33 due to the piezoelectric effect, and a signal component, which is larger than a reference electric potential V0 as shown in Fig. 7 (a), is caused to emerge from the filter module 62. As this occurs, in case the piezoelectric cable 33 is made to be provided simply on the window frame 13, the deformation of the piezoelectric cable 33 occurring when a trapping happens would be small. In the case of this embodiment, however, as shown in Fig. 2, since the elastic edging material 35 has the pliability and the elastic edging material 35 is easily compressed when a trapping happens, the amount of deformation of the piezoelectric element material 33 is increased.

Then, since the hollow portion 41 is also collapsed while the trapping is occurring, the amount of deformation of the piezoelectric cable 33 is increased further. Thus, a large amount of deformation of the piezoelectric cable 33 is obtained, the acceleration, which is a quadratic differential value of deformation amount, becomes large, and as a result of this, an output signal of the piezoelectric cable 33 becomes large. The determination module 63 determines that a contact with an object occurs in the event that the amplitude |V-V0| of V from V0 is larger than D0, and, as shown in Fig. 7 (b) , outputs pulse signals Lo -> Hi as a determination output at a time t2.

Given this determination signal, as shown in Fig. 7 (c), the control module 73 stops the application of the voltage of +V_{d} to the motor 25 and applies a voltage of -V_{d} for a certain period of time until a time t3 so as to cause the window glass 15 to drop a certain amount to thereby release the trapping or prevent the occurrence of a trapping. In the event that the pressure to the pressure sensor 17 is removed, a signal according to an acceleration by which the deformation is eliminated to restore an original condition (a signal component that is smaller than a reference potential V0 in Fig. 7(a)) is outputted from the piezoelectric cable 33.

Note that while whether V becomes larger or smaller than V0 when the pressure sensor 17 is deformed changes depending on the bending direction and polarizing direction of the piezoelectric element material 33, the allocation of electrodes (which to be made as the reference potential) and the supporting direction of the piezoelectric element material 33, since the determination module 63 determines on a trapping based on an absolute value of the amplitude from V0 of V, a trapping can be determined whether V is larger or smaller than V0.

In addition to the basic determination method, in the event that a determination on non-existence of contact with an object which constitutes a foreign matter is implemented as follows, the occurrence of trapping can be prevented.

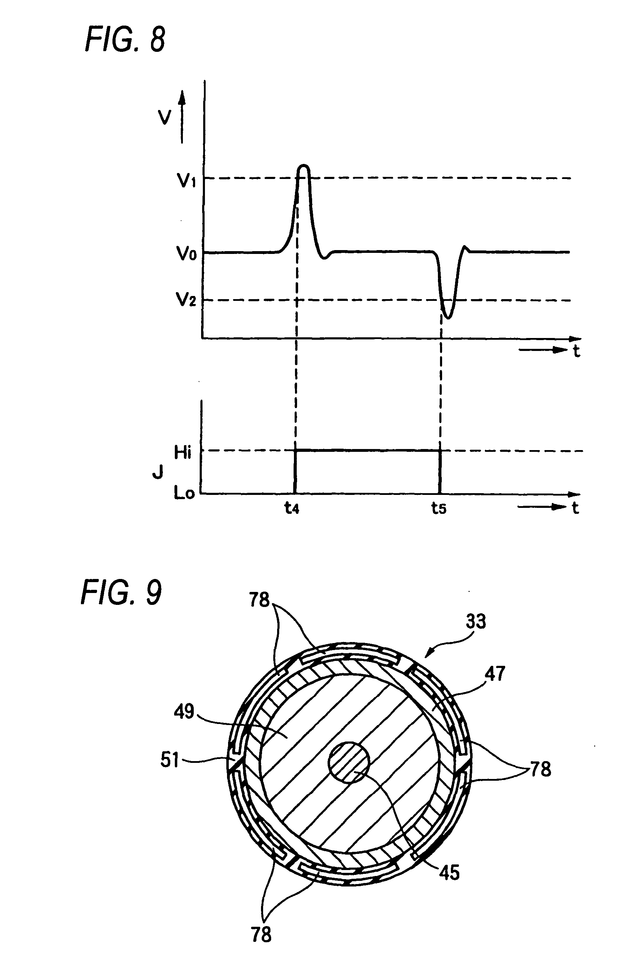

Fig. 8 shows characteristic charts showing, respectively, an output signal V from the filter module 62 and a determination signal J of the determination means 19. In Fig. 8, the axes of ordinates represent V and J, respectively, from the top in that order and the axes of abscissas represent time t.

As shown in Fig. 8(a), in the event that pressure sensor 17 is deformed, for example, by grabbing the window frame 13 at a time t4, a signal is outputted from the piezoelectric cable 33 due to the piezoelectric effect, and as a result of this, a signal component which is larger than the reference potential V0 is caused to emerge from the filter module 62.

Then, when the output signal V becomes equal to or larger than V1, which is preset, that is, when an amplitude |V-V0| from V0 of the output signal V becomes equal to or larger than V1, the determination module 63 determines that an obj ect has been brought into contact with the window frame 13, outputs a pulse signal Lo -> Hi (a determination signal) as a determination output at the time t4 as shown in Fig. 8(b) and holds the same.

Next, when the deformation on the pressure sensor 17 is removed, for example, by removing the hand from the window frame 13, a signal is outputted from the piezoelectric element material 33 due to an equal piezoelectric effect, and a signal component which is smaller than the reference potential V0 is caused to emerge from the filter module 62. As this occurs, when the output signal V2 becomes equal to or smaller than V2, which is preset, that is, when the amplitude |V-V0| from V0 of the output signal V becomes larger than V2, the determination module 63 determines that the object is removed from the window frame 13 and makes the signal at Hi level, which is a determination signal, become a signal at Lo level or Hi -> Lo at a time t5.

Namely, the pulse signal is held at Hi during a time from the contact of the object was detected until the separation thereof was detected and the output of the determination signal is held.

Here, should the opening and closing switch 75 be operated with a view to moving up or down the window glass 15 during the time from the time t4 when the contact of the object was detected until the time t5 when the separation thereof was detected, the control module 73 controls such that the operation of the window glass 15 is locked, whereby an obstacle is detected to thereby prevent the occurrence of trapping, the safety being thereby increased.

Note that the aforesaid output signal V changes with the polarity resulting from the polarization of the piezoelectric cable 33. As this occurs, since a signal results in which the polarity of the signal shown is reversed, the positive and negative symbols of the set values of V1 and V2 may be reversed.

In addition, the determination means 19 may be separated from the pressure sensor 17 by letting the function of the determination means 19 be borne by the side of the opening and closing control means 23, so that the handling characteristic such as the placement of the pressure sensor 17 itself is improved.

In the object detecting system 100 and the opening and closing system 150 that are constructed as has been described above, the material of the covering layer 51 in the pressure sensor 17, which is used therein, is improved to the elastic material having heat insulating properties, and therefore, even in the event that there occurs a drastic change in the ambient temperature of the pressure sensor 17, or, to be specific, the temperature of outside air which is in contact with the covering layer 51 and the temperatures of the elastic edging material 35 and the window frame 13, since the elastic material which covers the outside of the covering material 51 has the superior heat insulating properties to those of the conventional vinyl chloride, the drastic temperature change occurring outside is not transmitted to the composite piezoelectric material layer 49 situated inwards of the sensor.

In addition, the hollow portion 41 is formed in the elastic edging material 35 such that an air layer is interposed therein, and this air layer entrains a heat insulating function. From this viewpoint, as well, the effect on the composite piezoelectric material layer 49 existing in the interior of the pressure sensor by virtue of the drastic temperature change outside can be prevented.

Consequently, even in the event that no special cost is spent on the countermeasures against the pyroelectric effect, the electric charge output attributed to the pyroelectric effect can be suppressed, whereby a risk can be avoided that an output generated by the pyroelectric effect is mistakenly recognized as a contact of an object, thereby making it possible to improve the reliability with respect to the detection of an object.

In addition, since the elastic material adopted for the covering layer 51 has the superior waterproofness when compared with the conventional vinyl chloride, no consideration needs to be taken against the corrosion of the center electrode and the external electrode by virtue of the infiltration of water, whereby the electrodes can be fabricated of inexpensive metals such as copper when compared with the conventional case where the electrodes are fabricated of the metal such as aluminum in order to prevent the corrosion that is caused by the infiltration of water. This can realize a large reduction in fabrication costs together with the reduction realized with respect to the costs for the countermeasures against the pyroelectric effect.

As the object detecting system 100 or the opening and closing system 150, even in the event that no discharging circuit is connected as the countermeasures against the pyroelectric effect on the pressure sensor 17 particularly, the contact of an object or trapping thereof can be detected with high reliability.

In addition, normally, the pressure sensor 17 is laid out in the elastic edging material 35 as has been described above. In the pressure sensor 17 of the embodiment, since the covering layer 51 is made from the elastic material and hence, the pliability and the shock-absorbing properties that are required for the elastic edging material can be secured, the covering layer 51 itself, which functions as the heat insulating means, can be made to double as the elastic edging material or the mount portion 44 for mounting the pressure sensor 17 on the window frame 13 can be provided on the covering layer 51 which functions as the heat insulating means by forming the sensor in such a manner that the outer-shell shape thereof matches the elastic edging material 35, thereby making it possible to realize both the improvement in the mounting properties of the pressure sensor 17 on the window frame 13 and the reduction in the fabrication costs due to the reduction in the number of components.

In addition, as shown in Fig. 9, the covering layer 51 functioning as the heat insulating means may be made from an elastic material in which hollow portions 78 are formed, and the covering layer 51 so formed has superior heat insulating properties, an erroneous detection due to the pyroelectric effect can be prevented.

### (Second Embodiment)

Furthermore, a sheet-like sensor as a second embodiment of the invention is also effective.

As shown in Fig. 10, in this piezoelectric sheet, a sensor unit is formed by sandwiching a composite piezoelectric material layer 89 made from a composite piezoelectric material resulting from a mixture of a rubber elastic material made from chlorinated polyethylene and sintered powder of piezoelectric ceramic, which are similar to those used in the first embodiment, by a primary electrode 85 as an electrode which a signal is made to leave and a secondary electrode 87 and covering them by a covering layer 81 made from an expandable urethane and adapted to cover the outside of the sensor unit, whereby an output signal is outputted therefrom according to deformation acceleration generated at the time of deformation.

Since this sheet-like sensor is also covered by the heat insulating covering layer made from the expandable urethane, as with the cable-like sensor used in the first embodiment, the sheet-like sensor is free from a malfunction attributed to the pyroelectric effect and therefore can constitute the pressure sensor with high reliability.

While the invention has been described in detail and by reference to the specific embodiments, it is clear to those skilled in the art that various changes and modifications can be made thereto without departing from the spirit and scope of the invention.

The subject patent application is based on the Japanese Patent Application (No. 2003-7813) filed on January 16, 2003 and the contents thereof is incorporated herein by reference.

### <Industrial Applicability>

Note that the target application of the pressure sensor and the object detecting system according to the invention is not limited to the powered window system for the front seat of the automobile that has been described in the embodiments but they can also be applied to a powered hatch door at the rear of the automobile.

Furthermore, openings and closing members to which the invention is aimed to be applied are not limited to windows of the automobile but the invention can be applied to a powered sliding door, a powered sunroof and an automatic door in a building.

In addition, while the object detecting system has been described as being applied to the detecting system for detecting the trapping of a foreign matter between the opening and the closing member, the object detecting system of the invention is not limited to the detection of such trapping.

For example, the invention can also be used to detect a contact with an external object by providing the pressure sensor 17 and the determination means 19 on a bumper of a vehicle, and therefore, the invention is useful as a general-purpose object detecting system that can be used as a detection system for positioning articles which are being transported.

## Claims

1. A pressure sensor comprising:
a sensor unit in which a piezoelectric layer containing a piezoelectric ceramic material is sandwiched by a plurality of electrodes;
a covering layer which covers the sensor unit; and
heat insulating means made from an expandable synthetic resin which covers the circumference of the covering layer.

2. A pressure sensor as set forth in Claim 1, wherein the sensor unit is a cable-like sensor comprising a primary electrode which makes up a core unit, a piezoelectric layer which covers the primary electrode and a secondary electrode which covers the outside of the piezoelectric layer.

3. A pressure sensor as set forth in Claim 1, wherein the sensor unit is a sheet-like sensor which is formed such that a piezoelectric layer is sandwiched by a primary electrode and a secondary electrode.

4. A pressure sensor as set forth in any of Claims 1 to 3, wherein the heat insulating means is an elastic material having a hollow portion formed therein.

5. A pressure sensor as set forth in any of Claims 1 to 4, wherein the heat insulating means is made to double as the covering layer.

6. A pressure sensor as set forth in any of Claims 1 to 5, wherein the heat insulating means comprises a mounting portion for mounting the pressure sensor on an equipment base material.

7. A pressure sensor fabricating method for fabricating the pressure sensor set forth in any of Claims 1 to 6, comprising a step of molding a heat insulating means on the periphery of the sensor unit through extrusion molding.

8. An object detecting system comprising the pressure sensor set forth in any of Claims 1 to 6 and determination means for determining on the contact of a foreign matter with the pressure sensor based on an output signal of the pressure sensor, whereby the contact of an object with the equipment is detected.

9. An object detecting system comprising:
the pressure sensor set forth in any of Claims 1 to 6 that is mounted either on an edge of an opening of equipment or on an edge of a closing member which opens and closes the opening; and
determination means for determining on the contact of a foreign matter with the pressure sensor based on an output signal of the pressure sensor, whereby the trapping of a foreign matter between the opening and the closing member is detected.
